# EUROPEAN PATENT APPLICATION

(11) **EP 4 714 998 A1**
(43) Date of publication of application: **25.03.2026**
(21) Application number: 25199129.5
(22) Date of filing: 29.08.2025
(51) Int. Cl.: C08G 73/10, C09D 179/08, H01B 3/30

(54) **POLYAMIC ACID COMPOSITION WITH IMPROVED ADHESION AND POLYIMIDE CURED PRODUCT COMPRISING THE SAME**

(30) Priority: 30.08.2024 KR 20240118117
(71) Applicant: PI Advanced Materials Co., Ltd., Chungcheongbuk-do 27818 (KR)
(72) Inventor: Moon, Gyeong Min, 27818 Jincheon-gun (KR); Yoo, Cheol Hun, 27818 Jincheon-gun (KR); We, Jung Hoon, 27818 Jincheon-gun (KR); Park, Se Joo, 27818 Jincheon-gun (KR); Lee, Ik Sang, 27818 Jincheon-gun (KR)
(74) Representative: Altmann Stößel Dick Patentanwälte PartG mbB

(57) **Abstract**

The present invention provides a polyamic acid composition comprising a dianhydride monomer and a diamine monomer as polymerization units, wherein the diamine monomer comprises a first diamine monomer, a second diamine monomer, and a third diamine monomer, the second diamine monomer is a flexible diamine monomer having three or more benzene rings, and the third diamine monomer is represented by Chemical Formula 1. The polyamic acid composition of the present disclosure may have excellent adhesion and adherence to wires such as copper, and thus may have excellent usability as an insulating coating material for an electric wire, etc.

## Description

### [Technical Field]

The present disclosure relates to a polyamic acid composition and a polyimide cured product comprising the same, and more specifically, to a polyamic acid composition for coating for windings with excellent adhesion to wires and a polyimide cured product (film) comprising the same.

### [Background Art]

In general, polyimide (PI) resin refers to a highly heat-resistant resin obtained by performing solution polymerization on aromatic dianhydride and aromatic diamine or aromatic diisocyanate to prepare a polyamic acid derivative, followed by ring-closure dehydration at high temperature and imidization. The polyimide resin is an insoluble, infusible, ultra-high heat-resistant resin and has excellent properties such as thermal oxidation resistance, heat resistance, radiation resistance, low-temperature characteristics, chemical resistance, and the like, and thus it is used in a wide range of fields, including heat-resistant advanced materials such as automotive materials, aviation materials, and spacecraft materials, etc., and electronic materials such as insulating coatings, insulating films, semiconductors, and electrode protective films of TFT-LCD. Recently, the polyimide resin is also used in display materials such as optical fibers and liquid crystal alignment films, transparent electrode films by containing conductive filler in the films or performing surface coating, etc.

In particular, insulated wires used as windings for coils such as motors require a conductor-coating insulation layer (insulating film) that offers excellent insulation, adherence to conductors, heat resistance, mechanical strength, etc. Therefore, polyimide is used as a resin to form the insulation layer. A polyimide insulation layer is generally formed by applying a polyamic acid composition to a conductor, followed by curing.

Meanwhile, general polyamic acid compositions and polyimide resins manufactured therefrom, despite excellent physical properties thereof, do not have excellent adhesion to conductors, and thus problems of appearance defects may occur when forming an insulating coating. As described above, there are many difficulties in improving the properties required for polyamic acid compositions and polyimide resins manufactured therefrom, and in particular, since it is common for one property to be improved while another property is deteriorated, achieving the simultaneous fulfillment of multiple properties remains a persistent area of research in the relevant technical fields.

Therefore, there is a significant demand for a polyamic acid composition for conductor coating that simultaneously satisfies the heat resistance, insulation, and mechanical properties of polyimide, while also offering excellent adhesion to a conductor.

### [Disclosure]

### [Technical Problem]

An object of the present disclosure is to provide a polyamic acid composition for conductor coating with excellent adhesion to a conductor while simultaneously satisfying the heat resistance, insulation, and mechanical properties.

Another object of the present disclosure is to provide a polyimide cured product (or film) manufactured by curing the polyamic acid composition.

Still another object of the present disclosure is to provide a polyimide coating material comprising a cured product of the polyamic acid composition.

### [Technical Solution]

Various modifications can be made and various embodiments may be implemented in the present disclosure, and specific embodiments are illustrated and described in detail. However, it should be understood that this is not intended to limit the present disclosure to specific embodiments, and comprises all modifications, equivalents, and substitutes included in the spirit and scope of the present disclosure.

Terms used in the present application are only used to describe specific embodiments and are not intended to limit the present disclosure. Singular expressions shall include plural expressions unless the context clearly indicates otherwise. In the present specification, terms such as "comprise" or **"have"** are intended to designate the presence of features, numbers, steps, operations, components, parts, or combinations thereof described in the specification and it should not be understood as precluding the possibility of the presence or addition of one or more other features, numbers, steps, operations, components, parts, or combinations thereof.

When amounts, concentrations, or other values or parameters herein are given as ranges, preferred ranges, or lists of upper desirable values and lower desirable values, it should be understood as specifically disclosing all ranges formed by any pair of any upper range limit or preferred value and any lower range limit or preferred value, regardless of whether the scope is separately disclosed.

When ranges of numerical values are stated herein, unless otherwise stated, it is intended that the endpoints of the range and the scope of the parent disclosure within the range are not limited to the specific values stated when defining the range.

As used herein, "dianhydride" is intended to include precursors or derivatives thereof, which are also referred to as "dianhydride acid", "dianhydride" or "acid dianhydride". These products may technically not be dianhydrides, but will nonetheless react with diamines to form polyamic acids, and the polyamic acids may be converted back into polyimides.

As used herein, "diamine" is intended to include precursors or derivatives thereof, which may technically not be diamines, but will nonetheless react with dianhydride acids to form polyamic acids, and the polyamic acids may be converted back into polyimides.

As used herein, the term "halogen" means a substituent selected from fluorine (F), chloro (Cl), bromo (Br) and iodo (I).

As used herein, the term "unsubstituted" means a state in which it is not substituted with any substituent, indicating either its absence or the presence of a hydrogen.

As used herein, the term "substituted" refers to a moiety having a substituent that replaces hydrogen on one or more carbons of the main chain. "Substitution" or "substituted with" depends on whether such substitution is permissible for the substituted atom and substituent, and it is defined to include the implicit conditions that leads to stable compounds by substitution, for example, compounds that are not naturally modified by rearrangement, cyclization, elimination, and the like.

In the present disclosure, "Cₓ-C_{y}" means having a carbon number of x or more and y or less.

As used herein, the term "C₁-C₆ alkyl" means a C₁-C₆ straight-chain or branched-chain saturated hydrocarbon, such as, for example, methyl, ethyl, propyl, n-propyl, isopropyl, butyl, n-butyl, isobutyl, tert-butyl, sec-butyl, 1-methylbutyl, 1-ethyl-butyl, pentyl, n-pentyl, isopentyl, neopentyl, tert-pentyl, hexyl, n-hexyl, 1-methylpentyl, 2-methylpentyl, 4-methyl-2-pentyl, 3,3-dimethylbutyl, 2-ethylbutyl, and the like. Preferred alkyl groups include about 1, 2, 3, 4, 5 or 6 carbon atoms in the chain.

As used herein, the term "C₁-C₆ alkylene" may be straight-chain or branched-chain, and specifically means a saturated aliphatic hydrocarbon such as a methylene group, an ethylene group, a propylene group, an isopropylene group, a butylene group, an isobutylene group, a sec-butylene group, a t-butylene group, an n-pentylene group, or an n-hexylene group. The term "alkylene" may be unsubstituted or may be optionally substituted with one or more substituents that may be the same or different.

The term "C₁-C₃ haloalkyl" as used herein means a C₁-C₃ straight-chain or branched-chain saturated hydrocarbon in which at least one hydrogen atom is substituted with a halogen atom (i.e., F, Cl, Br, or I). Examples of the C₁-C₃ haloalkyl may include, but are not limited to, CH₂F, CHF₂, CF₃, etc.

The term "C₃-C₅ heteroaryl" as used herein refers to an optionally substituted aromatic ring containing 3 to 5 carbon atoms, in which at least one of the ring carbon atoms is substituted with a heteroatom selected from oxygen (O), nitrogen (N) and sulfur (S), or an aromatic ring (e.g., a bicyclic or tricyclic ring system) fused to one or more rings such as a heteroaryl ring, an aryl ring, a heterocyclic ring, or a carbocyclic ring, each of which may have an optional substituent. Examples of the C₃-C₅ heteroaryl may include heteroaryl including, but not limited to, pyrrole, pyrazole, imidazole, furan, isoxazole, oxazole, thiophene, isothiazole, thiazole, pyridine, pyridazine, pyrimidine, pyrazine, or triazine (e.g., 1,2,4-triazine, 1,3,5-triazine). Further, the heteroaryl may be substituted or unsubstituted.

Unless defined otherwise, all terms used herein, including technical or scientific terms, have the same meaning as commonly understood by one of ordinary skill in the art to which the present disclosure belongs. Terms such as those defined in commonly used dictionaries should be interpreted as having a meaning consistent with the meaning in the context of the related art, and unless explicitly defined in the present application, it is not to be construed in an idealized or overly formal sense. Specific details for the implementation of the invention will be described below.

### Polyamic acid composition

The present disclosure relates to a polyamic acid composition capable of providing improved adhesion and adherence to wires and being used for application in conductor coating.

The polyamic acid composition of the present disclosure may be a polyimide varnish.

The present disclosure provides a polyamic acid composition comprising a dianhydride monomer and a diamine monomer as polymerization units, wherein the diamine monomer comprises a first diamine monomer, a second diamine monomer, and a third diamine monomer, the second diamine monomer is a flexible diamine monomer having three or more benzene rings, and the third diamine monomer is represented by the following Chemical Formula 1: 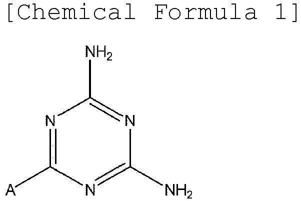 in Chemical Formula 1 above,
A may be unsubstituted or substituted, and is hydrogen, halogen, C₁-C₆ alkyl, phenyl, (C₁-C₆ alkylene) - (C₃-C₅ heteroaryl), (C₁-C₆ alkylene) -COOH, or -OH, wherein the substitution means substitution with halogen, C₁-C₃ alkyl, C₁-C₃ haloalkyl or oxo(=O).

Here, the first diamine monomer may be a diamine having two or fewer benzene rings.

Specifically, the first diamine monomer may comprise at least one selected from the group consisting of 1,4-diaminobenzene (or paraphenylenediamine, PDA, PPD), 1,3-diaminobenzene, 2,4-diaminotoluene, 2,6-diaminotoluene, 3,5-diaminobenzoic acid (DABA), 4,4'-diaminodiphenyl ether (or oxydianiline, ODA), 3,4'-diaminodiphenyl ether, 3,3'-diaminodiphenyl ether, 4,4'-diaminodiphenylmethane(methylenediamine), 3,3'-diaminodiphenylmethane, 3,4'-diaminodiphenylmethane, 3,3'-dimethyl-4,4'-diaminodiphenylmethane, 3,3',5,5'-tetramethyl-4,4'-diaminodiphenylmethane, 2,2'-bis(trifluoromethyl)-4,4'-diaminobiphenyl, 3,3'-dicarboxy-4,4'-diaminodiphenylmethane, 4,4'-diaminobenzanilide, 3,3'-dichlorobenzidine, 3,3'-dimethylbenzidine (or o-tolidine), 2,2'-dimethylbenzidine (or m-tolidine), 3,3'-dimethoxybenzidine, 2,2'-dimethoxybenzidine, 3,3'-diaminodiphenylsulfide, 3,4'-diaminodiphenylsulfide, 4,4'-diaminodiphenylsulfide, 3,3'-diaminodiphenylsulfone, 3,4'-diaminodiphenylsulfone, 4,4'-diaminodiphenylsulfone, 3,3'-diaminobenzophenone, 4,4'-diaminobenzophenone, 3,3'-diamino-4,4'-dichlorobenzophenone, 3,3'-diamino-4,4'-dimethoxybenzophenone, 2,2-bis(3-aminophenyl)propane, 2,2-bis(4-aminophenyl)propane, 2,2-bis(3-aminophenyl)-1,1,1,3,3,3-hexafluoropropane, 2,2-bis(4-aminophenyl)-1,1,1,3,3,3-hexafluoropropane, 3,3'-diaminodiphenylsulfoxide, 3,4'-diaminodiphenylsulfoxide, and 4,4'-diaminodiphenylsulfoxide.

More specifically, the first diamine monomer may comprise at least one selected from the group consisting of 1,4-diaminobenzene, 1,3-diaminobenzene, and 4,4'-diaminodiphenyl ether, and more preferably, 4,4'-diaminodiphenyl ether.

Further, the second diamine monomer may comprise at least one selected from the group consisting of 1,3-bis(3-aminophenyl)benzene, 1,3-bis(4-aminophenyl)benzene, 1,4-bis(3-aminophenyl)benzene, 2,2-bisaminophenoxyphenylpropane (BAPP), 1,3-bis(4-aminophenoxy)benzene (TPE-R), 1,4-bis(3-aminophenoxy)benzene (TPE-Q), 1,3-bis(3-aminophenoxy)-4-trifluoromethylbenzene, 3,3'-diamino-4-(4-phenyl)phenoxybenzophenone, 3,3'-diamino-4,4'-di(4-phenylphenoxy)benzophenone, 1,3-bis(3-aminophenylsulfide)benzene, 1,3-bis(4-aminophenylsulfide)benzene, 1,4-bis(4-aminophenylsulfide)benzene, 1,3-bis(3-aminophenylsulfone)benzene, 1,3-bis(4-aminophenylsulfone)benzene, 1,4-bis(4-aminophenylsulfone)benzene, 1,3-bis[2-(4-aminophenyl)isopropyl]benzene, 1,4-bis[2-(3-aminophenyl)isopropyl]benzene, 1,4-bis[2-(4-aminophenyl)isopropyl]benzene, 3,3'-bis(3-aminophenoxy)biphenyl, 3,3'-bis(4-aminophenoxy)biphenyl, 4,4'-bis(3-aminophenoxy)biphenyl, 4,4'-bis(4-aminophenoxy)biphenyl, bis[3-(3-aminophenoxy)phenyl]ether, bis[3-(4-aminophenoxy)phenyl]ether, bis[4-(3-aminophenoxy)phenyl]ether, bis[4-(4-aminophenoxy)phenyl]ether, bis[3-(3-aminophenoxy)phenyl]ketone, bis[3-(4-aminophenoxy)phenyl]ketone, bis[4-(3-aminophenoxy) phenyl] ketone, bis[4-(4-aminophenoxy)phenyl]ketone, bis[3-(3-aminophenoxy)phenyl]sulfide, bis[3-(4-aminophenoxy)phenyl]sulfide, bis[4-(3-aminophenoxy)phenyl]sulfide, bis[4-(4-aminophenoxy)phenyl]sulfide, bis[3-(3-aminophenoxy)phenyl]sulfone, bis[3-(4-aminophenoxy)phenyl]sulfone, bis[4-(3-aminophenoxy)phenyl]sulfone, bis[4-(4-aminophenoxy)phenyl]sulfone, bis[3-(3-aminophenoxy)phenyl]methane, bis[3-(4-aminophenoxy)phenyl]methane, bis[4-(3-aminophenoxy)phenyl]methane, bis[4-(4-aminophenoxy)phenyl]methane, 2,2-bis[3-(3-aminophenoxy) phenyl] propane, 2,2-bis[3-(4-aminophenoxy) phenyl] propane, 2,2-bis[4-(3-aminophenoxy) phenyl] propane, 2,2-bis[3-(3-aminophenoxy)phenyl]-1,1,1,3,3,3-hexafluoropropane, 2,2-bis[3-(4-aminophenoxy)phenyl]-1,1,1,3,3,3-hexafluoropropane, 2,2-bis[4-(3-aminophenoxy)phenyl]-1,1,1,3,3,3-hexafluoropropane, and 2,2-bis[4-(4-aminophenoxy)phenyl]-1,1,1,3,3,3-hexafluoropropane (BDAF).

More specifically, the second diamine monomer may comprise at least one selected from the group consisting of 2,2-bisaminophenoxyphenylpropane (BAPP), 1,3-bis(4-aminophenoxy)benzene (TPE-R), 1,4-bis(3-aminophenoxy)benzene (TPE-Q), and 2,2-bis[4-(4-aminophenoxy)phenyl]-1,1,1,3,3,3-hexafluoropropane (BDAF).

Further, in Chemical Formula 1 above, the A may be hydrogen, fluoro (F), chloro (Cl), bromo (Br), methyl, ethyl, propyl, phenyl, (C₁-C₆ alkylene) -imidazolyl, (C₁-C₆ alkylene)-COOH, or -OH, and the A may be unsubstituted or substituted with at least one or more methyl, ethyl, trifluoromethyl, or oxo(=O).

More specifically, the A may be hydrogen, fluoro (F), chloro (Cl), methyl, ethyl, propyl, phenyl, methylene-imidazolyl, ethylene-imidazolyl, propylene-imidazolyl, methylene-COOH, ethylene-COOH, propylene-COOH, butylene-COOH, or -OH, and the A may be unsubstituted or substituted with at least one or more methyl, ethyl, trifluoromethyl, or oxo (=O).

To be more specific, the A may be hydrogen, fluoro (F), chloro (Cl), methyl, ethyl, propyl, phenyl, methyl-substituted methylene-imidazolyl, methyl-substituted ethylene-imidazolyl, methyl-substituted propylene-imidazolyl, oxo (=O)-substituted methylene-COOH, oxo (=O)-substituted ethylene-COOH, oxo (=O)-substituted propylene-COOH, oxo (=O)-substituted butylene-COOH, or -OH.

In Chemical Formula 1 above, a carbon-to-nitrogen ratio (C/N) may be 0.5 to 2.5, preferably 0.6 to 2.1, and more preferably 0.7 to 1.9.

The third diamine monomer may comprise a triazine-based diamine, specifically, at least one selected from the group consisting of 1,3,5-triazine-2,4-diamine, 6-chloro-1,3,5-triazine-2,4-diamine, 4,6-diamino-1,3,5-triazin-2-ol, 6-methyl-1,3,5-triazine-2,4-diamine, 6-phenyl-1,3,5-triazine-2,4-diamine, 6-[2-(2-methylimidazol-1-yl)ethyl]-1,3,5-triazine-2,4-diamine, and 4-(4,6-diamino-1,3,5-triazin-2-yl)-4-oxobutanoic acid.

In an embodiment, the third diamine monomer may be 6-chloro-1,3,5-triazine-2,4-diamine alone, 4,6-diamino-1,3,5-triazin-2-ol alone, 6-methyl-1,3,5-triazine-2,4-diamine alone, 2,6-diamino-4-phenyl-1,3,5-triazine alone, 6-[2-(2-methylimidazolyl-1-yl)ethyl]-1,3,5-triazine-2,4-diamine alone, or 4-(4,6-diamino-1,3,5-triazin-2-yl)-4-oxobutanoic acid alone.

The third diamine monomer, which contains a functional group capable of forming a coordination bond with Cu, may be contained in the polyimide chain to improve adhesion, thereby preventing peeling of the coating layer caused by low adhesive property between the conductor and the polyimide insulator. In addition, physical properties of the polyimide film may be adjusted to suit the purpose after curing the polyamic acid composition.

In the present disclosure, the diamine monomer may comprise 50 to 98 mol% of the first diamine monomer, preferably 60 to 95 mol%, 70 to 90 mol%, and more preferably 78 to 88 mol%, based on 100 mol% of the total amount of the diamine monomer. By containing 50 to 98 mol% of the first diamine monomer, it is possible to provide a polyamic acid composition having desired thermal, mechanical, and electrical properties after curing.

Further, the diamine monomer may comprise 1 to 25 mol% of the second diamine monomer, preferably 1.5 to 15 mol%, 1.8 to 8 mol%, and more preferably 2 to 5 mol%, based on 100 mol% of the total amount of the diamine monomer. By containing 1 to 25 mol% of the second diamine monomer, it is possible to provide a polyamic acid composition having desired thermal, mechanical, electrical properties, and adhesion after curing.

Specifically, the second diamine monomer contained in the present disclosure (polyamic acid composition) has the effect of imparting flexibility to the polymer chain, thereby improving the appearance of the film to be manufactured thereafter, and increasing the amount range of the third diamine monomer (triazine-based diamine) added to improve adhesion. Therefore, when the second diamine monomer is contained in an amount less than 1 mol%, it not preferable since the effects described above cannot be expected, and when it is contained in an amount exceeding 25 mol%, it is also not preferable since the cost incurred by using the second diamine monomer is economically inefficient relative to the effects described above.

Further, the diamine monomer may comprise 1 to 25 mol% of the third diamine monomer, preferably 5 to 23 mol%, 8 to 21 mol%, and more preferably 10 to 20 mol%, based on 100 mol% of the total amount of the diamine monomer. By containing 1 to 25 mol% of the third diamine monomer, it is possible to provide a polyamic acid composition having excellent adhesion to conductors without cracking after curing.

Specifically, the third diamine monomer contained in the present disclosure (polyamic acid composition) may form a coordination bond with Cu, thereby having the effect of enhancing the adhesion between the polyimide insulator and the conductor. Therefore, by containing 1 to 25 mol% of the third diamine monomer, it is possible to provide a polyamic acid composition having improved adhesion and not causing cracking after curing.

In the present disclosure, the dianhydride monomer may comprise at least one selected from the group consisting of pyromellitic dianhydride (PMDA), biphenyl tetracarboxylic dianhydride (BPDA), 3,3',4,4'-benzophenone tetracarboxylic dianhydride (BTDA), oxidiphthalic dianhydride (ODPA), diphenylsulfone-3,4,3',4'-tetracarboxylic dianhydride (DSDA), bis(3,4-dicarboxyphenyl)sulfide dianhydride, 2,2-bis(3,4-dicarboxyphenyl)-1,1,1,3,3,3-hexafluoropropane dianhydride, 2,3,3',4'-benzophenonetetracarboxylic dianhydride, bis(3,4-dicarboxyphenyl)methane dianhydride, 2,2-bis(3,4-dicarboxyphenyl)propane dianhydride, p-phenylenebis(trimellitic monoester acid anhydride), p-biphenylenebis(trimellitic monoester acid anhydride), m-terphenyl-3,4,3',4'-tetracarboxylic dianhydride, p-terphenyl-3,4,3',4'-tetracarboxylic dianhydride, 1,3-bis(3,4-dicarboxyphenoxy)benzene dianhydride, 1,4-bis(3,4-dicarboxyphenoxy) benzene dianhydride, 1,4-bis(3,4-dicarboxyphenoxy)biphenyl dianhydride, 2,2-bis[(3,4-dicarboxy phenoxy)phenyl]propane dianhydride (BPADA), 2,3,6,7-naphthalene tetracarboxylic acid dianhydride, 1,4,5,8-naphthalene tetracarboxylic dianhydride, and 4,4'-(2,2-hexafluoroisopropylidene)diphthalic acid dianhydride.

Specifically, the dianhydride monomer may comprise at least one selected from the group consisting of pyromellitic dianhydride (PMDA), biphenyl tetracarboxylic dianhydride (BPDA), and benzophenone tetracarboxylic dianhydride (BTDA), and preferably, pyromellitic dianhydride (PMDA).

In an embodiment, the polyamic acid composition may comprise pyromellitic dianhydride (PMDA), 4,4'-diaminodiphenyl ether (ODA), 2,2'-bis[4-(4-aminophenoxy) phenyl] propane (BAPP), and 6-methyl-1,3,5-triazine-2,4-diamine as polymerization units.

In an embodiment, the polyamic acid composition may comprise pyromellitic dianhydride (PMDA), 4,4'-diaminodiphenyl ether (ODA), 2,2'-bis[4-(4-aminophenoxy) phenyl] propane (BAPP), and 6-phenyl-1,3,5-triazine-2,4-diamine as polymerization units.

In an embodiment, the polyamic acid composition may comprise pyromellitic dianhydride (PMDA), 4,4'-diaminodiphenyl ether (ODA), 2,2'-bis[4-(4-aminophenoxy) phenyl] propane (BAPP), and 6-[2-(2-methylimidazolyl-1-yl)ethyl]-1,3,5-triazine-2,4-diamine as polymerization units.

In an embodiment, the polyamic acid composition may comprise pyromellitic dianhydride (PMDA), 4,4'-diaminodiphenyl ether (ODA), 2,2'-bis[4-(4-aminophenoxy) phenyl] propane (BAPP), and 4-(4,6-diamino-1,3,5-triazin-2-yl)-4-oxobutanoic acid as polymerization units.

In an embodiment, the polyamic acid composition may comprise pyromellitic dianhydride (PMDA), 4,4'-diaminodiphenyl ether (ODA), 2,2'-bis[4-(4-aminophenoxy) phenyl] propane (BAPP), and 6-chloro-1,3,5-triazine-2,4-diamine as polymerization units.

In an embodiment, the polyamic acid composition may comprise pyromellitic dianhydride (PMDA), 4,4'-diaminodiphenyl ether (ODA), 2,2'-bis[4-(4-aminophenoxy)phenyl]propane (BAPP), and 4,6-diamino-1,3,5-triazin-2-ol as polymerization units.

Further, a molar ratio of the dianhydride monomer and the diamine monomer may be 6 : 4 to 4 : 6, preferably 5.5 : 4.5 to 4.5 : 6.5, and more preferably 5 : 5.

Further, the polyamic acid composition may have a polyimide solid content of 10 to 50 wt%. The lower limit of the polyimide solid content may be, for example, 11 wt% or more, 12 wt% or more, 13 wt% or more, 14 wt% or more, or 15 wt% or more, and the upper limit thereof may be, for example, 48 wt% or less, 45 wt% or less, 43 w% or less, 40 wt% or less, 38 wt% or less, 35 wt% or less, 33 wt% or less, or 30 wt% or less. By adjusting the polyimide solid content of the polyamic acid composition, it is possible to control the increase in viscosity and to shorten the processing time during the curing process.

Further, the polyamic acid composition of the present disclosure further comprises an organic solvent, wherein the organic solvent is not particularly limited as long as it is an organic solvent in which the polyamic acid is soluble, but may be, as one example, an aprotic polar solvent.

Specifically, the organic solvent may comprise at least one selected from the group consisting of N-methyl-pyrrolidone (NMP), N,N'-dimethylformamide (DMF), N,N'-diethylformamide (DEF), N,N'-dimethylacetamide (DMAc), dimethylpropanamide (DMPA), N,N-diethylacetamide (DEAc), dimethyl sulfoxide (DMSO), 3-methoxy-N,N-dimethylpropanamide (KJCMPA), p-chlorophenol, o-chlorophenol, gammabutyrolactone (GBL), diglyme, and naphthalene. Preferably, N-methyl-pyrrolidone (NMP), N,N'-dimethylformamide (DMF), N,N'-dimethylacetamide (DMAc), dimethyl sulfoxide (DMSO), etc., may be used.

Further, the organic solvent may further comprise a modifier containing a hydroxyl group (OH) or amine group (NH). Examples of the modifier containing a hydroxy group (OH) or an amine group (NH) may include ethylamine, triethanolamine, dimethylamine, trimethylamine, diethylenetriamine, ethylenediamine, tributylamine, pyridine, pyrrolidine, methanol, ethanol, propanol, isopropanol, sec-butanol, tert-butanol, n-amyl alcohol, isoamyl alcohol, hexanol, octanol, capryl alcohol, nonyl alcohol, decyl alcohol, undecyl alcohol, lauryl alcohol, myristyl alcohol, cetyl alcohol, stearyl alcohol, allyl alcohol, crotyl alcohol, propargyl alcohol, ethylene glycol, propylene glycol, benzyl alcohol, phenol, and the like. The modifier may control reactivity by reacting with the dianhydride monomer.

Further, the polyamic acid composition of the present disclosure may further comprise nanosilica surface-modified with organosilane. The nanosilica surface-modified with organosilane may prevent the aggregation of inorganic particles in the polyamic acid composition, and may enhance the interaction with solid content (polyamic acid) due to functional groups of the compound, thereby improving dispersibility and miscibility.

The nanosilica surface-modified with organosilane may have an average particle diameter of 1 to 200 nm, specifically, 5 to 150 nm, 5 to 100 nm, 5 to 70 nm, 10 to 50 nm, or 10 to 30 nm. The average particle diameter may be measured through equipment such as BET, SEM, zeta potential analyzer, and the like.

The organosilane of the nanosilica surface-modified with organosilane may comprise at least one selected from the group consisting of methyltrimethoxysilane, hexamethyldisiloxane, n-octyltrimethoxysilane, n-octyltriethoxysilane, isooctyltrimethoxysilane, dodecyltrimethoxysilane, octadecyltrimethoxysilane, propyltrimethoxysilane, hexyltrimethoxysilane, 3-methacryloxypropyltrimethoxysilane, 3-acryloxypropyltrimethoxysilane, 3-(methacryloxy)propyltriethoxysilane, 3-(methacryloxy)propylmethyldimethoxysilane, 3-(acryloxypropyl)methyldimethoxysilane, 3-(methacryloxy)propyldimethylethoxysilane, styrylethyltrimethoxysilane, phenyltriethoxysilane, p-tolyltriethoxysilane, vinylmethyldiacetoxysilane, vinyldimethylethoxysilane, vinylmethyldiethoxysilane, vinyltriethoxysilane, vinyltriacetoxysilane, vinyltriisopropoxysilane, vinyltrimethoxysilane, vinyltriphenoxysilane, vinyltri-t-butoxysilane, vinyltris(isobutoxy)silane, vinyltriisopropenoxysilane, vinyltris(2-methoxyethoxy)silane, N,N-diisopropylethylamine phenyltrimethoxysilane, glycidoxypropyl trimethoxysilane (GPTMS), (3-aminopropyl)trimethoxy-silane (APTMS), phenyltrimethoxysilane (PTMS), and N-phenyl-3-aminopropyltrimethoxysilane (PAPTES).

The nanosilica surface-modified with organosilane may be obtained by combining, on a surface of the nanosilica, a compound comprising at least one phenyl group at a terminal end and a compound comprising at least one amine group, hydroxy group, thiol group, or epoxide group at a terminal end. Specifically, the compound comprising at least one phenyl group at the terminal end may be phenyltrimethoxysilane (PTMS) or N-phenyl-3-aminopropyltrimethoxysilane (PAPTES). Further, the compound comprising at least one amine group, hydroxyl group, thiol group, or epoxide group at the terminal end may be glycidoxypropyl trimethoxysilane (GPTMS) or (3-aminopropyl)trimethoxy-silane (APTMS).

The nanosilica surface-modified with organosilane may be prepared by surface treating the nanosilica with organosilane. For example, nanosilica may be obtained by heating organosilanes under acidic or basic conditions and performing surface treatment for about 1 to 24 hours. In addition, the surface modification may be achieved by other known methods, for example, by mixing organosilanes in a solvent and reacting at a temperature of 10 to 100°C or 20 to 60°C for 1 to 10 hours or 1 to 5 hours to obtain surface-modified nanosilica. To combine two or more compounds on the surface of the nanosilica, each of the above methods may be performed.

The nanosilica surface-modified with organosilane may also be contained in an amount of 0.1 to 12.0 parts by weight, based on 100 parts by weight of the polyamic acid composition. For example, the lower limit of the amount of the nanosilica surface-modified with organosilane may be 0.2 parts by weight or more, 0.3 parts by weight or more, 0.35 parts by weight or more, 0.40 parts by weight or more, 0.45 parts by weight or more, 0.50 parts by weight or more, or 0.55 parts by weight or more. In addition, for example, the upper limit thereof may be, for example, 10 parts by weight or less, 9 parts by weight or less, 8 parts by weight or less, 7 parts by weight or less, 6 parts by weight or less, 5 parts by weight or less, 3 parts by weight or less, 2 parts by weight or less, 1.5 parts by weight or less, 1.25 parts by weight or less, 1.20 parts by weight or less, 1.15 parts by weight or less, 1.10 parts by weight or less, 1.05 parts by weight or less, 1.0 part by weight or less, 0.95 parts by weight or less, 0.9 parts by weight or less, 0.85 parts by weight or less, 0.8 parts by weight or less, 0.79 parts by weight or less, 0.78 parts by weight or less, 0.77 parts by weight or less, or 0.76 parts by weight or less. When the nanosilica is contained in the above range of amounts, it is preferable since it is effective in improving characteristics while not exhibiting deterioration of physical properties due to aggregation and reduction of usability.

### Polyamic acid composition and cured product thereof

In the present disclosure, the peel strength and adhesion through the Crosscut Test, which are mainly used as criteria for determining the adhesive property of the polyimide, may be confirmed.

After curing the polyamic acid composition according to the present disclosure, a peel strength may be at a non-peelable level. Here, as to the peel strength, the 90° peel strength may be measured using UTM (Instron model 5564) while peeling a sample at 50 mm/sec under conditions of 23°C and 50% RH.

After curing, the polyamic acid composition according to the present disclosure may have a crosscut adhesion of 5B or higher, as measured by ASTM D 3359 standard. Here, the crosscut adhesion may be measured by the method presented in ASTM D 3359.

In the present disclosure, tensile strength, modulus, and elongation, which are primarily used as criteria for determining mechanical properties of the polyimide, may be confirmed.

After curing, the polyamic acid composition according to the present disclosure may have a tensile strength of 95 MPa or more, and the lower limit of the tensile strength may be, for example, 98 MPa, 100 MPa, 102 MPa, 104 MPa, 105 MPa, 106 MPa, 107 MPa, 108 MPa, 109 MPa or 110 MPa more. The upper limit thereof is not particularly limited, but may be 400 MPa or less. The tensile strength may be determined by preparing samples of 220 mm in length and 10 mm in width, measuring the tensile strength with a grip gap of 50 mm and a rate of 50 mm/min using INSTRON's Instron 5564 UTM according to the ASTM D-882 standard, and calculating the average of 10 samples.

After curing, the polyamic acid composition according to the present disclosure may have a modulus of 2.0 GPa or more. The lower limit of the modulus may be, for example, 2.1 GPa or more, 2.2 GPa or more, 2.3 GPa or more, 2.4 GPa or more, or 2.5 GPa or more, and the upper limit thereof is not particularly limited, but may be 10 GPa or less. The modulus may be determined by preparing samples of 220 mm in length and 10 mm in width, measuring the modulus at a rate of 50 mm/min using INSTRON's Instron 5564 UTM according to the ASTM D-882 standard, and calculating the average of 10 samples.

After curing, the polyamic acid composition according to the present disclosure may have an elongation of 3% or more, and the lower limit of the elongation may be, for example, 4%, 5%, 6%, 7%, 8%, 9%, 10%, 11% or 12% or more. The upper limit thereof is not particularly limited, but may be 80% or less. In an embodiment, the elongation may be determined by preparing a sample of 220 mm in length and 10 mm in width and measuring an elongation at a rate (50 mm/min) using INSTRON's Instron 5564 UTM according to the ASTM D-882 standard.

In the present disclosure, the thermal decomposition temperature (Td), glass transition temperature (Tg), and coefficient of thermal expansion (CTE), which are primarily used as criteria for determining thermal properties of the polyimide, may be confirmed.

After curing, the polyamic acid composition according to the present disclosure may have a glass transition temperature (Tg) of 300°C or higher, and the lower limit of the glass transition temperature may be, for example, 310°C ± 5°C, 320°C ± 5°C, 330°C ± 5°C, 340°C ± 5°C, or 350°C ± 5°C or higher. The upper limit thereof is not particularly limited, but may be 600°C or lower. The glass transition temperature may be measured for polyimide at 5°C/min using dynamic mechanical analysis (DMA).

After curing, the polyamic acid composition according to the present disclosure may have a temperature at which 1% weight loss occurs, i.e., the 1 wt% thermal decomposition temperature (Td), of 340°C or higher, and the lower limit of the 1 wt% thermal decomposition temperature (Td) may be, for example, 342°C ± 2°C, 345°C ± 2°C, 350°C ± 2°C, 355°C ± 2°C, 360°C ± 2°C, 365°C ± 2°C, 370°C ± 2°C, 375°C ± 2°C, or 380°C ± 2°C or higher. Here, the upper limit thereof is not particularly limited, but may be 600°C or lower. After curing, the polyamic acid composition according to the present disclosure may have a temperature at which 5% weight loss occurs, i.e., the 5 wt% thermal decomposition temperature (Td), of 500°C or higher, and the lower limit of the 5 wt% thermal decomposition temperature (Td) may be, for example, 510°C ± 2°C, 515°C ± 2°C, 520°C ± 2°C, 525°C ± 2°C, 530°C ± 2°C, 533°C ± 2°C or 535°C ± 2°C or higher. Here, the upper limit thereof is not particularly limited, but may be 750°C or lower. The thermal decomposition temperature may be measured using TA's thermogravimetric analyzer Q50. In an embodiment, the polyimide may be heated up to 150°C at a rate of 10°C/min under a nitrogen atmosphere and then maintained isothermally for 30 minutes to remove moisture. Then, the temperature may be raised up to 600°C at a rate of 10°C/min, and the temperature at which 1% or 5% weight loss occurs may be measured.

After curing, the polyamic acid composition according to the present disclosure may have, in the range of 100°C to 350°C, a coefficient of thermal expansion of 30 ppm/°C or more, and the lower limit of the coefficient of thermal expansion may be, for example, 31 ppm/°C, 32 ppm/°C, 33 ppm/°C, 34 ppm/°C or 35 ppm/°C or more. Here, the upper limit thereof is not particularly limited, but may be 70 ppm/°C or less. In an embodiment, the coefficient of thermal expansion may be determined by measuring the slope in the range of 100 to 250°C with a thermogravimetric analyzer (TMA) when raising a temperature from room temperature to 350°C at a rate of 10°C/min.

In the present disclosure, the dielectric constant and dielectric breakdown strength, which are primarily used as criteria for determining electrical properties of the polyimide, may be confirmed.

After curing, the polyamic acid composition according to the present disclosure may have a dielectric constant of 4 or less, and the upper limit of the dielectric constant may be, for example, 3.9 or less, 3.85 or less, 3.8 or less, 3.75 or less, or 3.7 or less, and the lower limit thereof may be, but is not particularly limited to, 2.0 or more. Here, the dielectric constant may be measured at 10 GHz using a Keysight's split post dielectric resonator (SPDR).

After curing, the polyamic acid composition according to the present disclosure may have a dielectric breakdown strength (breakdown voltage: BDV) of 100 kV/mm or more as measured according to ASTM D149 standard, and the lower limit of the breakdown voltage may be, for example, 150 kV/mm or more, 160 kV/mm or more, 170 kV/mm or more, 180 kV/mm or more, 190 kV/mm or more, 195 kV/mm or more, 200 kV/mm or more, 205 kV/mm, 208 kV/mm, or 210 kV/mm or more. The upper limit thereof is not particularly limited, but may be 500 kV/mm or less. Specifically, the breakdown voltage (BDV) may be measured by pretreating each sample in an oven at 100°C to remove moisture, fixing the samples to a measuring instrument (PHENIX TECHNOLOGIES 6CCE50-5) set in a room temperature atmosphere, and applying a voltage of 10KVAc to the electrode to increase the AC voltage from 0 at a constant rate.

Further, the polyamic acid composition according to the present disclosure may have a viscosity in the range of 200 to 50,000 cP, the viscosity being measured at a temperature of 23°C and a shear rate of 1s⁻¹. Specifically, the lower limit of the viscosity of the polyimide solution may be 300 cP or more, 400 cP or more, 500 cP or more, 600 cP or more, 700 cP or more, 800 cP or more, 900 cP or more, or 1,000 cP or more, and the upper limit thereof may be 45,000 cP or less, 40,000 cP or less, 35,000 cP or less, 30,000 cP or less, 25,000 cP or less, 20,000 cP or less, 18,000 cP or less, 16,000 cP or less, 15,000 cP or less, 14,000 cP or less, 13,000 cP or less, 12,000 cP or less, 11,000 cP or less, or 10,000 cP or less. It is possible to manufacture a polyimide cured product with excellent processability and desired physical properties, by adjusting the viscosity range of the polyamic acid composition.

In another aspect of the present disclosure, there is provided a polyimide cured product obtained by curing the polyamic acid composition as described above, wherein the polyimide cured product may be a polyimide film.

In still another aspect of the present disclosure, there is provided a polyimide prepared by imidizing the polyamic acid composition as described above, wherein the polyimide may be in the form of a film.

In still another aspect of the present disclosure, there is provided a polyimide coating material comprising the polyimide cured product.

In an embodiment, a method of preparing the polyimide coating material may comprise coating a polyamic acid composition on a conductor surface; and imidizing the polyamic acid composition coated on the conductor surface.

The conductor may be a copper wire made of copper or a copper alloy, but may also comprise conductors made of other metal materials such as silver wire, etc., or various metal-plated wires such as aluminum or tin-plated conducting wires, etc. The conductor and coating material may have a thickness according to the KS C3107 standard. A diameter of the conductor may be in the range of 0.3 to 3.2 mm, and a standard film thickness of the coating material (average value of the maximum film thickness and minimum film thickness) may be 21 to 194 µm for type 0, 14 to 169 µm for type 1, and 10 to 31 µm for type 2. Depending on the cross-sectional shape of the conductor, the conductor may be a round wire, a rectangular wire, a hexagonal wire, etc., but is not limited thereto.

In another aspect of the present disclosure, there is provided an electric wire comprising the polyimide coating material.

Specifically, the wire may be a coating wire comprising the polyimide coating material prepared by coating the polyamic acid composition on a surface of the wire, followed by imidization. In an embodiment, the coating wire may comprise an electric wire; and a coating in which the above-described polyimide is coated on a surface of the wire and imidized.

Further, the present disclosure may provide an electronic device comprising the coating wire. The electronic device may be, for example, an electric motor.

Further, in still another aspect, there is provided a component comprising a molded body formed from the polyamic acid composition.

Specifically, the component may be electronic circuit board members, semiconductor devices, lithium ion battery members, solar cell members, fuel cell members, motor windings, engine peripheral members, paints, optical components, heat insulators, electromagnetic shielding materials, surge components, dental materials, slide coatings, and electrostatic chucks.

### [Advantageous Effects]

The polyamic acid composition of the present disclosure may have excellent adhesion and adherence to wires such as copper, and thus may have excellent usability as an insulating coating material for an electric wire, etc.

In addition, the polyamic acid composition of the present disclosure may stably form a film with excellent adhesion and adherence to wires such as copper by comprising a high content of nucleophile functional group monomer (triazine-based monomer).

More specifically, a recent alternative to increase the adhesion between conductors and polyimide insulators has been the use of nucleophile functional group monomers (triazine-based monomers) capable of coordinating with Cu; however, it presents a problem in that film formation is not achieved when the amount of nucleophile functional group monomers (triazine-based monomers) is increased to improve the adhesion. Meanwhile, the polyamic acid composition of the present disclosure may comprise a flexible diamine having three or more benzene rings to impart flexibility to the polymer chain, thereby improving the film appearance, and stably forming a film even if the composition contains a high content of triazine-based monomer.

### [Best Mode]

The following Examples are presented to help understanding of the present disclosure. The following exemplary embodiments are only provided to more easily understand the present disclosure, but the content of the present disclosure is not limited by these Examples.

### <Example 1: Polyamic Acid Composition>

### Example 1-1

Dimethylacetamide (DMAc) solvent was added to a reaction vessel purged with nitrogen gas, and nano silica surface-treated with organosilane (0.5 to 0.75 mol% based on the amount of diamine and dianhydride) and 4,4'-diaminodiphenyl ether (ODA), triazine-based diamine, and 2,2'-bis[4-(4-aminophenoxy)phenyl]propane (BAPP) were added. Then, pyromellitic dianhydride (PMDA) was added and stirred and polymerized for about 1 hour to prepare a polyamic acid composition (solid content of 15-30%, viscosity at 30°C of 1,000-10,000 cP).

### Examples 1-2 to 1-18, Comparative Examples 1-1 to 1-11 and Comparative Examples A-1 to A-6

Each polyamic acid composition was prepared using the same method as in Example 1-1, except that the amount of each component or the type of triazine-based diamine was changed as described in Table 1.

**[Table 1]**

| Classific ation | Triazine-based diamine | Dianhy dride (mol%) | Diamine (mol%) | | | |
|---|---|---|---|---|---|---|
| | | PMDA | PPD | ODA | BAPP | Triazine -based diamine |
| Comparati ve Example 1-1 | - | 100 | - | 100 | - | - |
| Comparati ve Example 1-2 | - | 100 | 25 | 75 | - | - |
| Comparati ve Example 1-3 | 6-Methyl-1,3,5-triazine-2,4-diamine | 100 | - | 91 | - | 9 |
| Comparati ve Example 1-4 | | 100 | 25 | 70 | - | 5 |
| Comparati ve Example A-1 | | 100 | - | 90 | - | 10 |
| Example 1-1 | | 100 | - | 88 | 2 | 10 |
| Example 1-2 | | 100 | - | 78 | 2 | 20 |
| Example 1-3 | | 100 | - | 70 | 5 | 25 |
| Comparati ve Example 1-5 | 6-Phenyl-1,3,5-triazine-2,4-diamine | 100 | - | 91 | - | 9 |
| Comparati ve Example A-2 | | 100 | - | 90 | - | 10 |
| Example 1-4 | | 100 | - | 88 | 2 | 10 |
| Example 1-5 | | 100 | - | 78 | 2 | 20 |
| Example 1-6 | | 100 | - | 70 | 5 | 25 |
| Comparati ve Example 1-6 | 6-[2-(2-methylimidaz ol-1-yl)ethyl]-1,3,5-triazine-2,4-diamine | 100 | - | 91 | - | 9 |
| Comparati ve Example 1-7 | | 100 | 25 | 70 | - | 5 |
| Comparati ve Example A-3 | | 100 | - | 90 | - | 10 |
| Example 1-7 | | 100 | - | 88 | 2 | 10 |
| Example 1-8 | | 100 | - | 78 | 2 | 20 |
| Example 1-9 | | 100 | - | 70 | 5 | 25 |
| Comparati ve Example 1-8 | 4- (4, 6-Diamino-1,3,5-triazin-2-yl)-4-oxobutanoic acid | 100 | - | 91 | - | 9 |
| Comparati ve Example A-4 | | 100 | - | 90 | - | 10 |
| Example 1-10 | | 100 | - | 88 | 2 | 10 |
| Example 1-11 | | 100 | - | 78 | 2 | 20 |
| Example 1-12 | | 100 | - | 70 | 5 | 25 |
| Comparati ve Example 1-9 | 6-Chloro-1,3,5-triazine-2,4-diamine | 100 | - | 91 | - | 9 |
| Comparati ve Example 1-10 | | 100 | 25 | 70 | - | 5 |
| Comparati ve Example A-5 | | 100 | - | 90 | - | 10 |
| Example 1-13 | | 100 | - | 88 | 2 | 10 |
| Example 1-14 | | 100 | - | 78 | 2 | 20 |
| Example 1-15 | | 100 | - | 70 | 5 | 25 |
| Comparati ve Example 1-11 | 4, 6-Diamino-1,3,5-triazin-2-ol | 100 | - | 91 | - | 9 |
| Comparati ve Example A-6 | | 100 | - | 90 | - | 10 |
| Example 1-16 | | 100 | - | 88 | 2 | 10 |
| Example 1-17 | | 100 | - | 78 | 2 | 20 |
| Example 1-18 | | 100 | - | 70 | 5 | 25 |

The abbreviations in Table 1 above are as follows:
PMDA: Pyromellitic dianhydride
PPD: Paraphenylene diamine
ODA: 4,4'-Diaminodiphenyl ether
BAPP: 2,2'-Bis[4-(4-aminophenoxy)phenyl]propane

### <Example 2: Polyimide Film (Polyimide Cured Product)>

### Example 2-1

The polyamic acid composition prepared according to Example 1-1 was rotated at a high speed of 2,000 rpm to remove air bubbles. Then, the polyamic acid composition was coated with a thickness of 20 to 26 µm on a soda-lime glass substrate using a spin coater. Next, a polyimide film was obtained by curing under the conditions of 110°C (20 minutes) → 150°C (20 minutes) → 200°C (20 minutes) → 300°C (20 minutes) under a nitrogen atmosphere.

### Examples 2-2 to 2-18, Comparative Examples 2-1 to 2-11, and Comparative Examples B-1 to B-7

Each polyimide film was manufactured using the same method as in Example 2-1, except that the polyamic acid composition was changed as described in Table 2.

**[Table 2]**

| Classification | Polyamic acid composition used | Whether or not film is formed |
|---|---|---|
| Comparative Example 2-1 | Comparative Example 1-1 | ○ |
| Comparative Example 2-2 | Comparative Example 1-2 | ○ |
| Comparative Example 2-3 | Comparative Example 1-3 | ○ |
| Comparative Example 2-4 | Comparative Example 1-4 | ○ |
| Comparative Example B-1 | Comparative Example A-1 | X |
| Example 2-1 | Example 1-1 | ○ |
| Example 2-2 | Example 1-2 | ○ |
| Example 2-3 | Example 1-3 | ○ |
| Comparative Example 2-5 | Comparative Example 1-5 | ○ |
| Comparative Example B-2 | Comparative Example A-2 | X |
| Example 2-4 | Example 1-4 | ○ |
| Example 2-5 | Example 1-5 | ○ |
| Example 2-6 | Example 1-6 | ○ |
| Comparative Example 2-6 | Comparative Example 1-6 | ○ |
| Comparative Example 2-7 | Comparative Example 1-7 | ○ |
| Comparative Example B-3 | Comparative Example A-3 | X |
| Example 2-7 | Example 1-7 | ○ |
| Example 2-8 | Example 1-8 | ○ |
| Example 2-9 | Example 1-9 | ○ |
| Comparative Example 2-8 | Comparative Example 1-8 | ○ |
| Comparative Example B-4 | Comparative Example A-4 | X |
| Example 2-10 | Example 1-10 | ○ |
| Example 2-11 | Example 1-11 | ○ |
| Example 2-12 | Example 1-12 | ○ |
| Comparative Example 2-9 | Comparative Example 1-9 | ○ |
| Comparative Example 2-10 | Comparative Example 1-10 | ○ |
| Comparative Example B-5 | Comparative Example A-5 | X |
| Example 2-13 | Example 1-13 | ○ |
| Example 2-14 | Example 1-14 | ○ |
| Example 2-15 | Example 1-15 | ○ |
| Comparative Example 2-11 | Comparative Example 1-11 | ○ |
| Comparative Example B-6 | Comparative Example A-6 | X |
| Example 2-16 | Example 1-16 | ○ |
| Example 2-17 | Example 1-17 | ○ |
| Example 2-18 | Example 1-18 | ○ |

Table 2 showed that Comparative Examples B-1 to B-7, which contained 10 mol% or more of triazine-based diamine, specifically 6-methyl-1,3,5-triazine-2,4-diamine, 6-phenyl-1,3,5-triazine-2,4-diamine, 6-[2-(2-methylimidazol-1-yl)ethyl]-1,3,5-triazine-2,4-diamine, 4-(4,6-diamino-1,3,5-triazin-2-yl)-4-oxobutanoic acid, 6-chloro-1,3,5-triazine-2,4-diamine, or 4,6-diamino-1,3,5-triazin-2-ol, cracked during the curing step and failed to form a film.

Meanwhile, even when containing 10 mol% or more of triazine-based diamine, it was confirmed that Examples 1-1 to 1-18 containing the flexible diamine (BAPP) formed a film after curing (Examples 2-1 to 2-18).

### <Experimental Examples>

### Experimental Example 1: Evaluation of Adhesion

Physical properties of the cured products of Examples 2-1 to 2-18 and Comparative Examples 2-1 and 2-11 obtained by curing the polyamic acid compositions prepared according to Examples 1-1 to 1-18 and Comparative Examples 1-1 to 1-11 were confirmed in the following manner, and results thereof are shown in Table 3 below.

### (1) Peel Strength

The polyamic acid compositions prepared in Examples and Comparative Examples were applied on Cu foil, followed by spin-coating and curing, to coat a polyimide cured product (film) on the Cu foil. The peel strength was measured while peeling the copper foil (Cu foil) layer and the polyimide cured product layer using UTM (Instron model 5564).

The strength was measured by fixing the polyimide cured layer (film layer) to the upper grip and the copper foil (Cu foil) layer to the lower grip, and then applying force at a peeling angle of 90° and a peeling speed of 50 mm/min under the conditions of 23°C and 50%RH. Results thereof are shown in Table 3 below.

### (2) Crosscut Adhesion (Crosscut Test)

The crosscut adhesion of each polyimide film manufactured according to Examples and Comparative Examples was measured using the method presented in ASTM D 3359, and the results are shown in Table 3 below. Specifically, the polyimide films manufactured according to Examples and Comparative Examples were cut into a checkerboard pattern at 1 mm intervals using a cutter, then a peeling test was performed using a dedicated tape, and the degree of peeling was recorded. A lower peeling number signifies greater reliability as an insulator, which is desirable. (5B indicates that the peeled area is 0% of the total; 4B means that the peeled area is more than 0% to less than 5% of the total; 3B means that the peeled area is 5% or more and less than 15%; 2B means that the peeled area is 15% or more and less than 35%; 1B means that the peeled area is 35% or more and less than 65%; and 0B means that the peeled area is 65% or more)

**[Table 3]**

| Polyimide film | Polyamic acid composition | Cu Adhesive Property (Adhesion to Cu) | |
|---|---|---|---|
| | | Peel Strength (N/m) | Crosscut Test |
| Comparative Example 2-1 | Comparative Example 1-1 | 2.4 | 2B |
| Comparative Example 2-2 | Comparative Example 1-2 | 2.9 | 1B |
| Comparative Example 2-3 | Comparative Example 1-3 | Non-peelable | 4B |
| Comparative Example 2-4 | Comparative Example 1-4 | Non-peelable | 4B |
| **Example 2-1** | **Example 1-1** | **Non-peelable** | **5B** |
| **Example 2-2** | **Example 1-2** | **Non-peelable** | **5B** |
| **Example 2-3** | **Example 1-3** | **Non-peelable** | **5B** |
| Comparative Example 2-5 | Comparative Example 1-5 | Non-peelable | 4B |
| **Example 2-4** | **Example 1-4** | **Non-peelable** | **5B** |
| **Example 2-5** | **Example 1-5** | **Non-peelable** | **5B** |
| **Example 2-6** | **Example 1-6** | **Non-peelable** | **5B** |
| Comparative Example 2-6 | Comparative Example 1-6 | 4.1 | 4B |
| Comparative Example 2-7 | Comparative Example 1-7 | 3.7 | 4B |
| **Example 2-7** | **Example 1-7** | **Non-peelable** | **5B** |
| **Example 2-8** | **Example 1-8** | **Non-peelable** | **5B** |
| **Example 2-9** | **Example 1-9** | **Non-peelable** | **5B** |
| Comparative Example 2-8 | Comparative Example 1-8 | Non-peelable | 4B |
| **Example 2-10** | **Example 1-10** | **Non-peelable** | **5B** |
| **Example 2-11** | **Example 1-11** | **Non-peelable** | **5B** |
| **Example 2-12** | **Example 1-12** | **Non-peelable** | **5B** |
| Comparative Example 2-9 | Comparative Example 1-9 | Non-peelable | 4B |
| Comparative Example 2-10 | Comparative Example 1-10 | Non-peelable | 4B |
| **Example 2-13** | **Example 1-13** | **Non-peelable** | **5B** |
| **Example 2-14** | **Example 1-14** | **Non-peelable** | **5B** |
| **Example 2-15** | **Example 1-15** | **Non-peelable** | **5B** |
| Comparative Example 2-11 | Comparative Example 1-11 | Non-peelable | 4B |
| **Example 2-16** | **Example 1-16** | **Non-peelable** | **5B** |
| **Example 2-17** | **Example 1-17** | **Non-peelable** | **5B** |
| **Example 2-18** | **Example 1-18** | **Non-peelable** | **5B** |

Table 3 showed that Comparative Examples 2-1 and 2-2, which did not contain triazine-based diamine, had low peel strength and low crosscut adhesion (Crosscut Test) evaluation results.

In addition, it was confirmed that Examples containing triazine-based diamine and flexible diamine (BAPP) showed improved adhesion to copper (Cu) compared to Comparative Examples (Comparative Examples 2-3 to 2-11) containing only triazine-based diamine. This indicated that the copper (Cu) adhesion is further improved by increasing the amount of triazine-based diamine by further comprising the flexible diamine in Examples.

### Experimental Example 2: Evaluation of mechanical and thermal properties

Physical properties of the cured products of the polyamic acid compositions prepared according to all Examples of the present disclosure were confirmed by the following method.

### (1) Tensile Strength, Young's Modulus, and Elongation

With respect to the polyimide films manufactured according to all Examples, samples were prepared with 50 mm in length and 10 mm in width and measured at a rate (50 mm/min) using INSTRON's Instron 5564 UTM, and the average of 10 samples was calculated.

As a result, it was confirmed that the polyimide films manufactured according to all Examples of the present disclosure had a tensile strength of 95 MPa or more, a modulus of 2.0 GPa or more, and an elongation of 3% or more.

### (2) Temperature at Which 1% Weight Loss and Temperature at Which 5% Weight Loss (Td)

TA's thermogravimetric analyzer Q50 was used, and each polyimide film manufactured according to all Examples and Comparative Examples of the present disclosure was heated up to 150°C at a rate of 10°C/min under a nitrogen atmosphere and then maintained isothermally for 30 minutes to remove moisture. Then, the temperature at which 1% or 5% weight loss occurred by heating up to 600°C at a rate of 10°C/min was measured.

As a result, it was confirmed that the temperature (Td) at which a 1% weight loss occurred in each polyimide film manufactured according to all Examples of the present disclosure was 340°C or higher, and the temperature (Td) at which a 5% weight loss occurred was 500°C or higher.

### (3) Glass Transition Temperature (Tg)

The glass transition temperature of each polyimide film manufactured according to Examples and Comparative Examples was measured using DMA at 5°C/min up to 350°C.

As a result, it was confirmed that the glass transition temperature of each polyimide film manufactured according to all Examples of the present disclosure was 300°C or higher.

### (4) Coefficient of Thermal Expansion (CTE)

With respect to the polyimide films manufactured according to all Examples and Comparative Examples, the coefficient of thermal expansion (CTE) was determined by measuring the slope in the range of 100 to 250°C with TA's thermogravimetric analyzer (TMA) Q400 when raising a temperature from room temperature up to 350°C at a rate of 10°C/min.

As a result, it was confirmed that the CTE of each polyimide film manufactured according to all Examples of the present disclosure was 30 ppm/°C or more.

### Experimental Example 3: Evaluation of Electrical Characteristics

Physical properties of the cured products of the polyamic acid compositions prepared according to all Examples of the present disclosure were confirmed by the following method.

### (1) Dielectric Constant

With respect to the polyimide films manufactured according to Examples and Comparative Examples, the dielectric constant of each sample at 10 GHz was measured under the conditions of 23°C and 50%RH using a Keysight's split post dielectric resonator (SPDR), and the average of 2 to 3 samples was calculated.

As a result, it was confirmed that each polyimide film manufactured according to all Examples of the present disclosure had a dielectric constant of 4 or less after curing.

### (2) Dielectric Breakdown Strength

The breakdown voltage (BDV) values of polyimide films manufactured according to Examples and Comparative Examples of the present disclosure were measured according to the ASTM D149 standard, and the average of 8 samples was calculated. Specifically, the breakdown voltage (BDV) was measured by pretreating each polyimide film in an oven at 100°C to remove moisture, fixing the films to a measuring instrument (PHENIX TECHNOLOGIES 6CCE50-5) set in a room temperature atmosphere, and applying a voltage of 10KVAc to the electrode to increase the AC voltage from 0 at a constant rate.

As a result, it was confirmed that each polyimide film manufactured according to all Examples of the present disclosure had the dielectric breakdown strength (BDV) of 100 kV/mm or more as measured according to the ASTM D149 standard.

The results of Experimental Examples 1 to 3 were summarized to confirm that the polyamic acid compositions of the present disclosure and the cured products (films) thereof contained the specific triazine-based diamine and further contained the flexible diamine having three or more benzene rings, thereby exhibiting stable mechanical, thermal, and electrical properties and greatly improved adhesion to Cu. In particular, it is quite limited and difficult to obtain polyamic acid compositions that satisfy multiple properties including the above-described effects simultaneously, as it is common for one property to be improved while another property is deteriorated. Thus, the present disclosure has technical significance in that it has discovered an optimal monomer component and component ratio while exhibiting excellent various physical properties.

Further, a recent alternative to increase the adhesion between conductors and polyimide insulators has been the use of nucleophile functional group monomers (triazine-based monomers) capable of coordinating with Cu; however, it presents a problem in that film formation is not achieved when the amount of nucleophile functional group monomers (triazine-based monomers) is increased to improve the adhesion. To improve this issue, by further comprising the flexible diamine having at least three benzene rings, the present disclosure confirmed that the film is stably formable even when the amount of nucleophile functional group monomers (triazine-based monomers) capable of forming a coordination bond with Cu is increased to improve adhesion to Cu. In addition, it was confirmed that the present disclosure is designed to include the flexible diamine having three or more benzene rings and have an amount of the triazine-based monomer so as to impart the flexibility to the polymer chain without the film cracking, resulting in significantly improved adhesion between the conductor and the polyimide insulator and also excellent various physical properties.

In the present specification, the detailed description of the contents capable of being sufficiently recognized and inferred by those skilled in the art of the present disclosure are omitted, and many variations and modification can be made within a range that does not change the technical spirit or essential configuration of the present disclosure in addition to the specific exemplary embodiments described in the present specification. Therefore, the present disclosure may also be practiced in a manner different from that specifically described and illustrated herein, which can be understood by those skilled in the art.

## Claims

1. A polyamic acid composition comprising a dianhydride monomer and a diamine monomer as polymerization units,
wherein the diamine monomer comprises a first diamine monomer, a second diamine monomer, and a third diamine monomer,
the second diamine monomer is a flexible diamine monomer having three or more benzene rings, and
the third diamine monomer is represented by the following Chemical Formula 1: 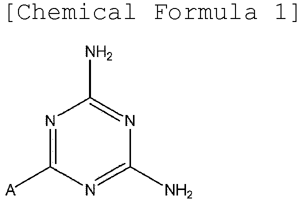
in Chemical Formula 1 above,
A may be unsubstituted or substituted, and is hydrogen, halogen, C₁-C₆ alkyl, phenyl, (C₁-C₆ alkylene) - (C₃-C₅ heteroaryl), (C₁-C₆ alkylene) -COOH, or -OH, wherein the substitution means substitution with halogen, C₁-C₃ alkyl, C₁-C₃ haloalkyl or oxo(=O).

2. The polyamic acid composition of claim 1, wherein the first diamine monomer is a diamine having two or fewer benzene rings.

3. The polyamic acid composition of claim 1 or 2, wherein the first diamine monomer comprises at least one selected from the group consisting of 1,4-diaminobenzene (or paraphenylenediamine, PDA, PPD), 1,3-diaminobenzene, 2,4-diaminotoluene, 2,6-diaminotoluene, 3,5-diaminobenzoic acid (DABA), 4,4'-diaminodiphenyl ether (or oxydianiline, ODA), 3,4'-diaminodiphenyl ether, 3,3'-diaminodiphenyl ether, 4,4'-diaminodiphenylmethane(methylenediamine), 3,3'-diaminodiphenylmethane, 3,4'-diaminodiphenylmethane, 3,3'-dimethyl-4,4'-diaminodiphenylmethane, 3,3',5,5'-tetramethyl-4,4'-diaminodiphenylmethane, 2,2'-bis(trifluoromethyl)-4,4'-diaminobiphenyl, 3,3'-dicarboxy-4,4'-diaminodiphenylmethane, 4,4'-diaminobenzanilide, 3,3'-dichlorobenzidine, 3,3'-dimethylbenzidine (or o-tolidine), 2,2'-dimethylbenzidine (or m-tolidine), 3,3'-dimethoxybenzidine, 2,2'-dimethoxybenzidine, 3,3'-diaminodiphenylsulfide, 3,4'-diaminodiphenylsulfide, 4,4'-diaminodiphenylsulfide, 3,3'-diaminodiphenylsulfone, 3,4'-diaminodiphenylsulfone, 4,4'-diaminodiphenylsulfone, 3,3'-diaminobenzophenone, 4,4'-diaminobenzophenone, 3,3'-diamino-4,4'-dichlorobenzophenone, 3,3'-diamino-4,4'-dimethoxybenzophenone, 2,2-bis(3-aminophenyl)propane, 2,2-bis(4-aminophenyl)propane, 2,2-bis(3-aminophenyl)-1,1,1,3,3,3-hexafluoropropane, 2,2-bis(4-aminophenyl)-1,1,1,3,3,3-hexafluoropropane, 3,3'-diaminodiphenylsulfoxide, 3,4'-diaminodiphenylsulfoxide, and 4,4'-diaminodiphenylsulfoxide.

4. The polyamic acid composition of any one of claims 1 to 3, wherein the second diamine monomer comprises at least one selected from the group consisting of 1,3-bis(3-aminophenyl)benzene, 1,3-bis(4-aminophenyl)benzene, 1,4-bis(3-aminophenyl)benzene, 2,2-bisaminophenoxyphenylpropane (BAPP), 1,3-bis(4-aminophenoxy)benzene (TPE-R), 1,4-bis(3-aminophenoxy)benzene (TPE-Q), 1,3-bis(3-aminophenoxy)-4-trifluoromethylbenzene, 3,3'-diamino-4-(4-phenyl)phenoxybenzophenone, 3,3'-diamino-4,4'-di(4-phenylphenoxy)benzophenone, 1,3-bis(3-aminophenylsulfide)benzene, 1,3-bis(4-aminophenylsulfide)benzene, 1,4-bis(4-aminophenylsulfide)benzene, 1,3-bis(3-aminophenylsulfone)benzene, 1,3-bis(4-aminophenylsulfone)benzene, 1,4-bis(4-aminophenylsulfone)benzene, 1,3-bis[2-(4-aminophenyl)isopropyl]benzene, 1,4-bis[2-(3-aminophenyl)isopropyl]benzene, 1,4-bis[2-(4-aminophenyl)isopropyl]benzene, 3,3'-bis(3-aminophenoxy)biphenyl, 3,3'-bis(4-aminophenoxy)biphenyl, 4,4'-bis(3-aminophenoxy)biphenyl, 4,4'-bis(4-aminophenoxy)biphenyl, bis[3-(3-aminophenoxy)phenyl]ether, bis[3-(4-aminophenoxy)phenyl]ether, bis[4-(3-aminophenoxy)phenyl]ether, bis[4-(4-aminophenoxy)phenyl]ether, bis[3-(3-aminophenoxy)phenyl]ketone, bis[3-(4-aminophenoxy)phenyl]ketone, bis[4-(3-aminophenoxy) phenyl] ketone, bis[4-(4-aminophenoxy)phenyl]ketone, bis[3-(3-aminophenoxy)phenyl]sulfide, bis[3-(4-aminophenoxy)phenyl]sulfide, bis[4-(3-aminophenoxy)phenyl]sulfide, bis[4-(4-aminophenoxy)phenyl]sulfide, bis[3-(3-aminophenoxy)phenyl]sulfone, bis[3-(4-aminophenoxy)phenyl]sulfone, bis[4-(3-aminophenoxy)phenyl]sulfone, bis[4-(4-aminophenoxy)phenyl]sulfone, bis[3-(3-aminophenoxy)phenyl]methane, bis[3-(4-aminophenoxy)phenyl]methane, bis[4-(3-aminophenoxy)phenyl]methane, bis[4-(4-aminophenoxy)phenyl]methane, 2,2-bis[3-(3-aminophenoxy) phenyl] propane, 2,2-bis[3-(4-aminophenoxy) phenyl] propane, 2,2-bis[4-(3-aminophenoxy) phenyl] propane, 2,2-bis[3-(3-aminophenoxy)phenyl]-1,1,1,3,3,3-hexafluoropropane, 2,2-bis[3-(4-aminophenoxy)phenyl]-1,1,1,3,3,3-hexafluoropropane, 2,2-bis[4-(3-aminophenoxy)phenyl]-1,1,1,3,3,3-hexafluoropropane, and 2,2-bis[4-(4-aminophenoxy)phenyl]-1,1,1,3,3,3-hexafluoropropane (BDAF).

5. The polyamic acid composition of any one of claims 1 to 4, wherein the A is hydrogen, fluoro (F), chloro (Cl), bromo (Br), methyl, ethyl, propyl, phenyl, (C₁-C₆ alkylene)-imidazolyl, (C₁-C₆ alkylene)-COOH, or -OH, and
the A is unsubstituted or substituted with at least one or more methyl, ethyl, trifluoromethyl, or oxo (=O).

6. The polyamic acid composition of any one of claims 1 to 5, wherein the third diamine monomer comprises at least one selected from the group consisting of 1,3,5-triazine-2,4-diamine, 6-chloro-1,3,5-triazine-2,4-diamine, 4,6-diamino-1,3,5-triazin-2-ol, 6-methyl-1,3,5-triazine-2,4-diamine, 6-phenyl-1,3,5-triazine-2,4-diamine, 6-[2-(2-methylimidazol-1-yl)ethyl]-1,3,5-triazine-2,4-diamine, and 4-(4,6-diamino-1,3,5-triazin-2-yl)-4-oxobutanoic acid.

7. The polyamic acid composition of any one of claims 1 to 6, wherein the diamine monomer comprises 50 to 98 mol% of the first diamine monomer, based on 100 mol% of the total amount of the diamine monomer.

8. The polyamic acid composition of any one of claims 1 to 7, wherein the diamine monomer comprises 1 to 25 mol% of the second diamine monomer, based on 100 mol% of the total amount of the diamine monomer.

9. The polyamic acid composition of any one of claims 1 to 8, wherein the diamine monomer comprises 1 to 25 mol% of the third diamine monomer, based on 100 mol% of the total amount of the diamine monomer.

10. The polyamic acid composition of any one of claims 1 to 9, wherein the dianhydride monomer comprises at least one selected from the group consisting of pyromellitic dianhydride (PMDA), biphenyl tetracarboxylic dianhydride (BPDA), 3,3',4,4'-benzophenone tetracarboxylic dianhydride (BTDA), oxidiphthalic dianhydride (ODPA), diphenylsulfone-3,4,3',4'-tetracarboxylic dianhydride (DSDA), bis(3,4-dicarboxyphenyl)sulfide dianhydride, 2,2-bis(3,4-dicarboxyphenyl)-1,1,1,3,3,3-hexafluoropropane dianhydride, 2,3,3',4'-benzophenonetetracarboxylic dianhydride, bis(3,4-dicarboxyphenyl)methane dianhydride, 2,2-bis(3,4-dicarboxyphenyl) propane dianhydride, p-phenylenebis(trimellitic monoester acid anhydride), p-biphenylenebis(trimellitic monoester acid anhydride), m-terphenyl-3,4,3',4'-tetracarboxylic dianhydride, p-terphenyl-3,4,3',4'-tetracarboxylic dianhydride, 1,3-bis(3,4-dicarboxyphenoxy)benzene dianhydride, 1,4-bis(3,4-dicarboxyphenoxy) benzene dianhydride, 1,4-bis(3,4-dicarboxyphenoxy)biphenyl dianhydride, 2,2-bis[(3,4-dicarboxy phenoxy)phenyl]propane dianhydride (BPADA), 2,3,6,7-naphthalene tetracarboxylic acid dianhydride, 1,4,5,8-naphthalene tetracarboxylic dianhydride, and 4,4'-(2,2-hexafluoroisopropylidene)diphthalic acid dianhydride.

11. The polyamic acid composition of any one of claims 1 to 10, wherein the polyamic acid composition after curing has a crosscut adhesion of 5B or higher according to ASTM D 3359 standard.

12. The polyamic acid composition of any one of claims 1 to 11, wherein the polyamic acid composition after curing has a tensile strength of 95 MPa or more, a modulus of 2.0 GPa or more, and an elongation of 3% or more.

13. The polyamic acid composition of any one of claims 1 to 12, wherein the polyamic acid composition after curing has a glass transition temperature of 300°C or higher,
a temperature (Td) at which 1% weight loss occurs of 340°C or higher,
a temperature (Td) at which 5% weight loss occurs of 500°C or higher, and
a coefficient of thermal expansion (CTE) of 30 ppm/°C or more in the range of 100°C to 350°C.

14. The polyamic acid composition of any one of claims 1 to 13, wherein the polyamic acid composition after curing has a dielectric constant of 4 or less, and a dielectric breakdown strength (breakdown voltage: BDV) of 100 kV/mm or more as measured according to the ASTM D149 standard.

15. A polyimide cured product manufactured by curing the polyamic acid composition according to any one of claims 1 to 14.
